# EUROPÄISCHE PATENTSCHRIFT

(11) **EP 3 567 305 B1**
(45) Veröffentlichungstag und Bekanntmachung des Hinweises auf die Patenterteilung: **13.05.2020**
(21) Anmeldenummer: 18171286.0
(22) Anmeldetag: 08.05.2018
(51) Int. Cl.: F21S 41/29, F21S 41/675, F21S 41/32, F21S 41/143, F21S 41/39, F21S 41/255

(54) **LICHTMODUL FÜR KRAFTFAHRZEUGSCHEINWERFER**
LIGHT MODULE FOR MOTOR VEHICLE HEADLAMPS
MODULE D'ÉCLAIRAGE DE PHARE DE VÉHICULE AUTOMOBILE

(43) Veröffentlichungstag der Anmeldung: 13.11.2019
(73) Patentinhaber: ZKW Group GmbH, 3250 Wieselburg (AT)
(72) Erfinder: Karlinger, Günter, 3254 Bergland (AT); Hungendorfer, Martin, 3642 Häusling/Dunkelsteinerwald (AT); Mitterlehner, Stefan, 3240 Mank (AT)
(74) Vertreter: Patentanwaltskanzlei Matschnig & Forsthuber OG

(56) Entgegenhaltungen:
- EP-A1- 0 936 402
- EP-A1- 2 998 643
- EP-A2- 2 690 348
- FR-A1- 2 687 762
- GB-A- 191 300 843
- US-A1- 2014 098 539

## Beschreibung

Die Erfindung betrifft ein Lichtmodul für einen Kraftfahrzeugscheinwerfer mit einem flachen Leuchtelement, einem Tragrahmen und einem in dem Tragrahmen befestigten optischen Abbildungssystem, wobei das optische Abbildungssystem einen Linsenträger und eine in dem Linsenträger angeordnete Linse umfasst und das flache Leuchtelement in einem Aufnahme-Bereich des Tragrahmens angeordnet ist, wobei das optische Abbildungssystem über einen bajonettartigen Verschluss mit dem Tragrahmen verbunden ist, wobei der Tragrahmen Bajonettvorsprünge aufweist, die mit Bajonettkonturen des Linsenträgers korrespondieren und zu den Bajonettkonturen passend ausgebildet sind, und jede Bajonettkontur zumindest ein Federelement aufweist, der Tragrahmen erste und zweite Referenzvorsprünge zum Referenzieren der Linse zu dem flachen Leuchtelement aufweist, wobei die ersten Referenzvorsprünge an den Bajonettvorsprüngen und die zweiten Referenzvorsprünge in dem Aufnahme-Bereich angeordnet sind.

Außerdem betrifft die Erfindung einen Kraftfahrzeugscheinwerfer mit zumindest einem solchen Lichtmodul.

Lichtmodule für Kraftfahrzeugscheinwerfer, bei denen eine Linse oder ein Linsenpaket mit einem Träger durch eine Steck-Drehverbindung verbunden wird, sind im Stand der Technik bekannt. Eine Steck-Drehverbindung ermöglicht eine relativ leichte Montage, verursacht allerdings nicht selten eine lange Toleranzkette. Unter einer Toleranzkette versteht man eine Kette von Toleranzen, die durch Vorhandensein mehrerer einzelner, einen Gesamt-Bauteil bildender Bauteile entstehen. Solche Toleranzen entstehen beispielsweise in einem (Linsen-)Objektiv, in dem die einzelnen Linsen aufeinander abgestimmt werden. Wird ein solches Objektiv und im Allgemeinen ein optisches Abbildungssystem einer Lichtquelle vorgelagert, ist es wünschenswert das ganze Objektiv auf diese Lichtquelle abzustimmen. Hierdurch entstehen weitere Toleranzen. Eine kürzere Toleranzkette ermöglicht eine höhere Präzision und bei lichtabbildenden Systemen wie Lichtmodule für Kraftfahrzeugscheinwerfer eine bessere Qualität der erzeugten Lichtverteilung.

EP 2 998 643 A1 offenbart ein Lichtmodul für einen Kraftfahrzeugscheinwerfer mit einem flachen Leuchtelement, einem Tragrahmen und einem in dem Tragrahmen befestigten optischen Abbildungssystem, wobei das optische Abbildungssystem einen Linsenträger und eine in dem Linsenträger angeordnete Linse umfasst und das flache Leuchtelement in einem Aufnahme-Bereich des Tragrahmens angeordnet ist, wobei das optische Abbildungssystem über einen schiebeartigen Verschluss mit dem Tragrahmen verbunden ist, wobei der Tragrahmen Konturen aufweist, die mit den Vorsprüngen des Linsenträgers korrespondieren und jede Vorsprung ein Federelement aufweist. Die ersten Referenzvorsprünge sind neben der Konturen angeordnet. Jedes Federelement zieht damit den korrespondierenden Vorsprung gegen den Tragrahmen.

Die Aufgabe der vorliegenden Erfindung besteht darin, die Toleranzkette zu verkürzen und die Anzahl der Montageschritte gering zu halten.

Diese Aufgabe wird mit einem Lichtmodul der oben genannten Art erfindungsgemäß dadurch gelöst, dass alle Referenzvorsprünge zu dem flachen Leuchtelement hin vorspringen, und jedes zumindest eine Federelement gegen den korrespondierenden Bajonettvorsprung drückt, wodurch die ersten Referenzvorsprünge die Linse in eine Arretierposition drücken, in der sie zu dem flachen Leuchtelement referenziert ist.

Das zumindest eine (vorgespannte) Federelement übt also die Federkraft auf den korrespondierenden Bajonettvorsprung aus. Es findet eine statische Kraftübertragung statt, wobei die Bajonettvorsprünge über die ersten Referenzvorsprünge mit gleicher Federkraft die Linse gegen den Linsenträger drücken und diese dadurch in der Arretierposition halten. Dadurch ergibt sich in der Arretierposition ein formschlüssiger Eingriff, durch den der Linsenträger und folglich das ganze optische Abbildungssystem in dem Tragrahmen axialfest gehalten wird. Die Bajonettvorsprünge und die damit zusammenwirkende Bajonettkonturen verhindern das Zurückziehen des optischen Abbildungssystems aus dem Tragrahmen in die Axialrichtung. Die ersten, an den Bajonettvorsprüngen angeordneten Referenzvorsprünge sorgen gleichzeitig dafür, dass die Linse zu dem flachen Leuchtelement referenziert ist. Der bajonettartige Verschluss ist also eingerichtet, nicht nur das optische Abbildungssystem mit dem Tragrahmen zu verbinden sondern auch die Linse des optischen Abbildungssystems zu dem flachen Leuchtelement zu referenzieren.

Die erfindungsgemäße Anordnung der Referenzvorsprünge gemeinsam mit dem oben beschriebenen bajonettartigen Verschluss ermöglicht ein Untergreifen der Linse durch den Linsenträger ermöglicht. Das Untergreifen bewirkt, dass die Linse direkt mittels des Linsenträgers gegen den Tragrahmen gedrückt wird, wodurch die Toleranzkette zwischen dem flachen Leuchtelement und der Linse wesentlich verkürzt wird. Somit wird der Abstand von dem flachen Leuchtelement zu der Linse nur über ein einziges Bauteil - in dem vorliegenden Fall über Tragrahmen - abgebildet (einfach abzustimmen, wesentlich kürzere Toleranzkette).

Dadurch dass alle Referenzvorsprünge zu dem flachen Leuchtelement hin - d.h. in eine im Wesentlichen gleiche Richtung vorspringen, kann die Linse durch das bajonettartige Verschließen im Trägerteil auf gleicher Seite wie das flache Leuchtelement referenziert werden, wodurch Toleranzen verringert werden.

Darüber hinaus ist ein bajonettartiger Verschluss vorteilhaft, weil das optische Abbildungssystem mit dem Tragrahmen händisch verbunden sein kann - es sind beispielsweise keine Schrauben o.Ä. für diesen Verschluss notwendig.

Bei einer praxisbewahrten Ausführungsform ist vorgesehen, dass der Tragrahmen einstückig, vorzugsweise durch ein Spritzgussverfahren erhältlich ist, wobei insbesondere die ersten und die zweiten Referenzvorsprünge durch gleiche Werkzeughälfte in einem Spritzgussverfahren gebildet sind. Eine oben beschriebene Verkürzung der Toleranzkette kann beispielsweise durch Herstellen des Tragrahmens mit der gleichen Werkzeughälfte umgesetzt werden, weil dadurch ein Abstimmen zweier Werkzeughälften aufeinander nicht mehr notwendig ist.

Beispielsweise kann es vorteilhaft sein, wenn an jedem Bajonettvorsprung genau ein erster Referenzvorsprung angeordnet ist.

Besondere Vorteile ergeben sich, wenn alle Referenzvorsprünge in eine Richtung vorspringen, die parallel zu einer optischen Achse des Lichtmoduls ausgerichtet ist.

Hinsichtlich der Definition der Bezugsebenen kann es zweckmäßig sein, genau drei Bajonettvorsprünge, genau drei ersten Referenzvorsprünge und vorzugsweise genau drei zweiten Referenzvorsprünge vorzusehen.

Bei einer vorteilhaften Anordnung kann vorgesehen sein, dass das zumindest eine Federelement gegen den korrespondierenden Bajonettvorsprung mit Federkraft drückt, welche in die gleiche Richtung wirkt, in die alle Referenzvorsprünge vorspringen.

Weitere Vorteile (beispielsweise hinsichtlich Herstellung) ergeben sich, wenn alle ersten und/oder alle zweiten Referenzvorsprünge gleich hoch sind.

Es können sich weitere Vorteile ergeben, wenn die Bajonettvorsprünge als sich von Peripherie zu Mitte des Tragrahmens radial erstreckende Laschen ausgebildet sind, insbesondere wenn die ersten Referenzvorsprünge an distalen Enden der Laschen angeordnet sind.

Es kann zweckdienlich sein, wenn jede Bajonettkontur einen Löseposition-Bereich und einen Arretierposition-Bereich aufweist, wobei der Löseposition-Bereich zum Aufnehmen des korrespondierenden Bajonettvorsprungs bereitgestellt ist und das zumindest eine Federelement in dem Arretierposition-Bereich angeordnet ist.

Bei einer praxisbewahrten Ausführungsform kann der Linsenträger als ein einstückiger, zylinderförmiger, vorzugsweise zumindest teilweise aus Kunststoff ausgebildeter Hohlkörper ausgebildet sein, dessen Wand sich zu dem flachen Leuchtelement hin treppenartig verjüngen kann.

Besonders vorteilhaft kann es sein, wenn in der Arretierposition die Linse von den ersten Referenzvorsprüngen gegen einen Referenzbereich des Linsenträgers gedrückt ist, wobei der Referenzbereich vorzugsweise an einer Innenwand des Linsenträgers (an einer inneren Seite einer Umfangswand des Linsenträgers) angeordnet ist und beispielsweise als eine umlaufende Druckfläche, insbesondere als drei definierte Druckpunkte, die vorzugsweise in gleichmäßigen Winkelabständen angeordnet sind, ausgebildet ist.

Der Referenzbereich kann auch eine weitere Funktion besitzen und eingerichtet sein, die Linse in dem Linsenträger in einer Position zu halten, in der die Linse durch Arretieren des Linsenträgers in dem Tragrahmen gebracht wird. Wie bereits erwähnt kann der Referenzbereich als eine umlaufende Druckfläche ausgeführt werden. Drei definierte Druckpunkte lassen sich aber im Werkzeug besser/einfacher abstimmen.

Weiters kann vorgesehen sein, dass sich jede Bajonettkontur über zumindest zwei Stufen - eine erste und eine zweite Stufe - und eine erste, zwischen den zumindest zwei Stufen angeordnete Setzstufe des Hohlkörpers erstreckt, wobei der Referenzbereich an einer Innenseite der ersten Stufe angeordnet ist.

Insbesondere kann die erste Stufe einen massiven Stufen-Bereich aufweisen, an dessen Innenseite der Referenzbereich angeordnet sein kann, die Linse einen vom Rand der Linse radial abstehenden Radialkragen mit einem massiven Radialkragen-Bereich umfassen kann, wobei der massive Radialkragen-Bereich dem massiven Stufen-Bereich zugeordnet ist und auf diesem aufliegt.

Dabei kann vorgesehen sein, dass die ersten Referenzvorsprünge gegen den massiven Radialkragen-Bereich drücken.

In dem optischen Abbildungssystem können mit Vorteil weitere Linsen - Zusatz-Linsen vorgesehen sein, die beispielsweise in dem Linsenträger aufgenommen sind. Weiters kann vorgesehen sein, dass der Linsenträger auf seiner Innenwand zumindest ein erstes der Linse zugeordnetes Zentrier-Element und ein zweites der zumindest einen Zusatz-Linse zugeordnetes Zentrier-Element aufweist, wobei das zumindest eine erste Zentrier-Element und das zumindest eine zweite Zentrier-Element einander derart korrespondieren, dass die Linse und die Zusatz-Linsen in dem Linsenträger zentriert sind.

Es kann zweckdienlich sein, die zumindest eine Zusatz-Linse und die Linse zu zentrieren. Wenn das optische Abbildungssystem als ein Linsenträger mit mehreren zentrierten Linsen - also als ein Objektiv - ausgebildet ist, kann Montage aller Linsen als Paket von gleicher Verbaurichtung erfolgen. Darüber hinaus wird dadurch Vormontage der Optiken (der Linsen) zu einem Paket ermöglicht, was weitere logistische Vorteile mit sich bringt.

Weiters kann es vorteilhaft sein, wenn die zumindest eine Zusatz-Linse von einer zweiten Setzstufe des Linsenträgers radial umfasst ist, wobei die erste Setzstufe auf ihrer Innenmantelfläche das zumindest eine erste Zentrier-Element und die zweite Setzstufe auf ihrer Innenmantelfläche das zumindest eine zweite Zentrier-Element aufweist, wobei das zumindest eine erste Zentrier-Element dem zumindest einen zweiten Zentrier-Element derart korrespondiert, dass die Linse und die Zusatz-Linsen zentriert sind.

Die Zentrier-Elemente (das erste und das zweite), beziehungsweise Zentrierstege sind eingerichtet, optische Achsen der Optiken - der Linse und der zumindest einen Zusatz-Linse - zu positionieren und aufeinander abzustimmen. Vorzugsweise liegen die Optiken in dem Linsenträger an den entsprechenden Zentrier-Elementen spielfrei an.

Weiters kann es vorteilhaft sein, wenn der Linsenträger auf seiner Innenwand ein Antirotationselement zum Verhindern einer Rotation (um die Axialrichtung X) der zumindest einen Zusatz-Linse aufweist, wobei die zumindest eine Zusatz-Linse vorzugsweise ein dem Antirotationselement korrespondierendes Gegenelement aufweist, das mit dem Antirotationselement in Eingriff steht und die Rotation der zumindest einen Zusatz-Linse verhindert.

Darüber hinaus kann es zweckdienlich sein, wenn die zweite Setzstufe auf ihrer Innenmantelfläche das Antirotationselement zum Verhindern einer Rotation der zumindest einen Zusatz-Linse in dem Linsenträger aufweist, wobei die zumindest eine Zusatz-Linse vorzugsweise ein dem Antirotationselement korrespondierendes Gegenelement aufweist, das mit dem Antirotationselement in Eingriff steht und die Rotation der zumindest einen Zusatz-Linse verhindert, insbesondere können das Antirotationselement als eine sich in Axialrichtung ersteckende Erhebung und das Gegenelement als eine Ausnehmung ausgebildet sein.

Bei einer praxisbewahrten Ausführungsform kann mit Vorteil vorgesehen sein, dass das zumindest eine Federelement einstückig mit dem Linsenträger, vorzugsweise in dessen Umfangswand ausgebildet ist.

Darüber hinaus ist es zweckdienlich, wenn das zumindest eine Federelement aus einem elastischen Material, vorzugsweise demselben Material, aus dem der Linsenträger hergestellt ist, ausgebildet ist.

Außerdem kann es zweckmäßig sein, wenn jeder Bajonettkontur jeweils eine Öffnung in der Umfangswand des Linsenträgers zugeordnet ist, wobei die Bajonettkontur von der jeweiligen Öffnung durch einen Steg getrennt ist, welcher einen in die Bajonettkontur vorspringenden Nocken aufweist, wobei der Steg mit dem Nocken das entsprechende zumindest eine Federelement bilden.

Wie bereits erwähnt verhindert das Antirotationselement eine Rotation der zumindest einen Zusatz-Linse um ihre optische Achse. Das beispielsweise als ein Steg ausgebildete Antirotationselement - manchmal als "Codierungssteg" genannt - kann sicher stellen, dass Zusatz-Linsen, die keine rotationssymmetrische optische Fläche in Bezug auf die Linsenbundachse aufweisen, nicht verdreht verbaut werden können und dadurch die Lichtverteilung nicht verzerrt werden kann.

Darüber hinaus kann es weitere Vorteile geben, wenn das optische Abbildungssystem ein Halteelement aufweist, welches Halteelement mit dem Linsenträger über eine Rastverbindung verbunden ist und die zumindest eine Zusatz-Linse in dem Linsenträger hält und insbesondere wenn das Halteelement federnde Zungen zum Halten der zumindest einen Zusatz-Linse in dem Linsenträger aufweist.

Das Halteelement drückt mithilfe der federnden Zungen die zumindest eine Zusatz-Linse auf die Linse und fixiert diese somit in eine definierte Position, in der die zumindest eine Zusatz-Linse zu der Linse referenziert ist. Da die Linse zu dem Tragrahmen und/oder zu dem flachen Leuchtelement referenziert ist, ist auch die zumindest eine Zusatz-Linse zu dem Tragrahmen und/oder zu dem flachen Leuchtelement referenziert.

Es kann zweckmäßig sein, wenn die Rastverbindung durch an dem Halteelement angeordnete Rastvorsprünge und zu den Rastvorsprüngen korrespondierende in dem Linsenträger ausgebildete Rasten gebildet ist.

Darüber hinaus kann es zweckdienlich sein, ein Sicherungsmittel vorzusehen, das dem optischen Abbildungssystem und dem Tragrahmen zugeordnet ist und eingerichtet ist, ein spontanes Lösen des optischen Abbildungssystems von dem Tragrahmen zu verhindern.

Besonders vorteilhaft kann es sein, wenn das Sicherungsmittel ein erstes, an dem optischen Abbildungssystem angeordnetes Sicherungselement und ein zweites, dem Sicherungselement korrespondierendes, an dem Tragrahmen angeordnetes Sicherungselement, wobei das erste Sicherungselement und das zweite Sicherungselement eingerichtet sind, zusammenzuwirken und dabei ein Zurückdrehen des optischen Abbildungssystems aus dem Tragrahmen zu verhindern.

Die Erfindung samt weiteren Vorteilen ist im Folgenden an Hand beispielhafter Ausführungsformen näher erläutert, die in der Zeichnung veranschaulicht sind. In dieser zeigt
Fig. 1a und 1b perspektivische Ansichten eines Lichtmoduls in Explosionsdarstellung;
Fig. 2 eine Seitenansicht des Tragrahmens und des mit dem Tragrahmen über einen bajonettartigen Verschluss verbundenen optischen Abbildungssystems des Lichtmoduls der Figuren 1a und 1b, und
Fig. 3a und 3b perspektivische Ansichten des Linsenträgers des Lichtmoduls der Figuren 1a und 1b in Explosionsdarstellung.

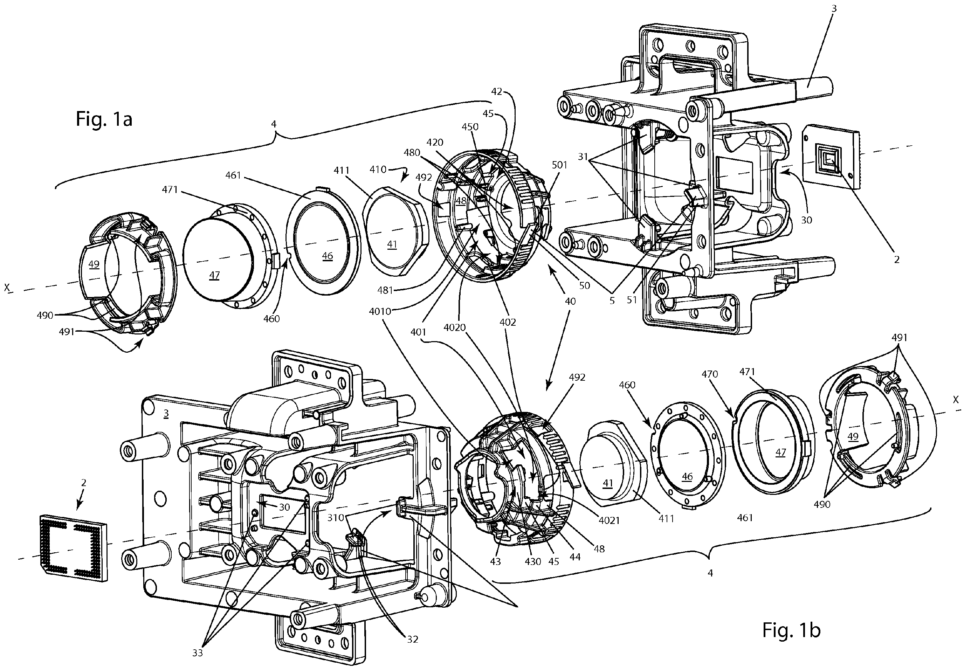

Zunächst wird auf Figuren 1a und 1b Bezug genommen, die ein einem erfindungsgemäßen Lichtmodul entsprechendes Lichtmodul 1 in einer Explosionsdarstellung aus zwei verschiedenen Perspektiven zeigen.

Das Lichtmodul 1 weist ein flaches Leuchtelement in Form eines mikroelektromechanischen Bauelements, vorzugsweise eines Mikrospiegelaktors 2 (DMD-Chip) auf. Im vorliegenden Fall erzeugt das Leuchtelement 2 kein eigenes Licht und leuchtet nur solange es von einer Lichtquelle (nicht gezeigt) beleuchtet wird. Das Leuchtelement 2 kann auch als ein Lichtkonversionsmittel, welches beispielsweise mit Licht einer Laserlichtquelle beleuchtet wird, oder als eine LED-Lichtquelle ausgebildet sein. Der DMD-Chip 2 kann an einem Bauteil (nicht gezeigt) angeordnet/befestigt sein. Der Bauteil kann in Form eines Gehäuses ausgebildet sein, in dem Steuereinrichtung sowie ein Kühlkörper für den DMD-Chip 2 angeordnet sind. Die Steuereinrichtung, beispielsweise einen Mikrokontroller, ist eingerichtet durch das Leuchtelement 2 erzeugte Leuchtbild, beispielsweise in seiner Form, zu ändern. Das mittels des DMD-Chips 2 erzeugte Leuchtbild wird mittels eines in einem Tragrahmen 3 gehaltenen optischen Abbildungssystems 4 vor das Lichtmodul 1 und, wenn das Lichtmodul 1 in einem Kraftfahrzeug verbaut ist, vor das Kraftfahrzeug in Form einer Lichtverteilung, beispielsweise einer Abblend- oder Fernlichtverteilung, projiziert. Der Tragrahmen 3 ist vorgesehen, um das optische Abbildungssystem 4 bezüglich des DMD-Chips 2 in einer Position zu halten, in der das ganze Lichtmodul 1 zentriert ist und die optischen Komponenten des Lichtmoduls 1 aufeinander abgestimmt sind. Der Tragrahmen 3 weist einen Aufnahme-Bereich **30** auf. Der Aufnahme-Bereich 30 ist zum Aufnehmen des DMD-Chips 2 und im Allgemeinen - des flachen Leuchtelements - vorgesehen und weist eine entsprechende Form auf, sodass der DMD-Chip (oder das flache Leuchtelement) in dem Aufnahme-Bereich 30 angeordnet sein kann. Dadurch kann das flache Leuchtelement 2 - im vorliegenden Beispiel der DMD-Chip - bezüglich des Tragrahmens 3 referenziert werden. Das optische Abbildungssystem 4 umfasst einen Linsenträger **40** und eine in dem Linsenträger 40 angeordnete Linse **41** und ist über einen bajonettartigen Verschluss mit dem Tragrahmen 3 verbunden. Dafür sind an dem Tragrahmen 3 Bajonettvorsprünge **31** vorgesehen, die mit Bajonettkonturen **401** des Linsenträgers 40 korrespondieren und zu den Bajonettkonturen 401 passend ausgebildet sind. Dabei weist jede Bajonettkontur 401 zumindest ein Federelement **402** auf, welches eingerichtet ist, mit zumindest einem Bajonettvorsprung 31 zusammenzuwirken und den Linsenträger 40 in dem Tragrahmen 3 in einer Arretierposition zu halten. Die Bajonettkonturen 401 sind beispielsweise als (durchgehende) Öffnungen / Nuten in einer Umfangswand des Linsenträgers 40 ausgebildet.

Der Tragrahmen 3 weist erste und zweite Referenzvorsprünge **32, 33,** die zum Referenzieren der Linse 41 zu dem flachen Leuchtelement 2 auf, wobei die ersten Referenzvorsprünge 32 an den Bajonettvorsprüngen 31 und die zweiten Referenzvorsprünge 33 in dem Aufnahme-Bereich 30 angeordnet sind. Alle Referenzvorsprünge springen 32, 33 zu dem flachen Leuchtelement 2 hin vor. Dadurch ist es beispielsweise möglich, die Toleranzkette zu kürzen. Tatsächlich, wenn alle - sowohl die ersten, als auch die zweiten - Referenzvorsprünge 32, 33 in die gleiche Richtung vorspringen, wird eine Fertigung (beispielsweise durch Spritzgießen) aller Referenzvorsprünge 32, 33 durch die gleiche Werkzeughälfte ermöglicht. Dadurch kann das Verkürzen der Toleranzkette umgesetzt werden, weil ein Abstimmen zwischen den beiden Werkzeughälften wegfällt.

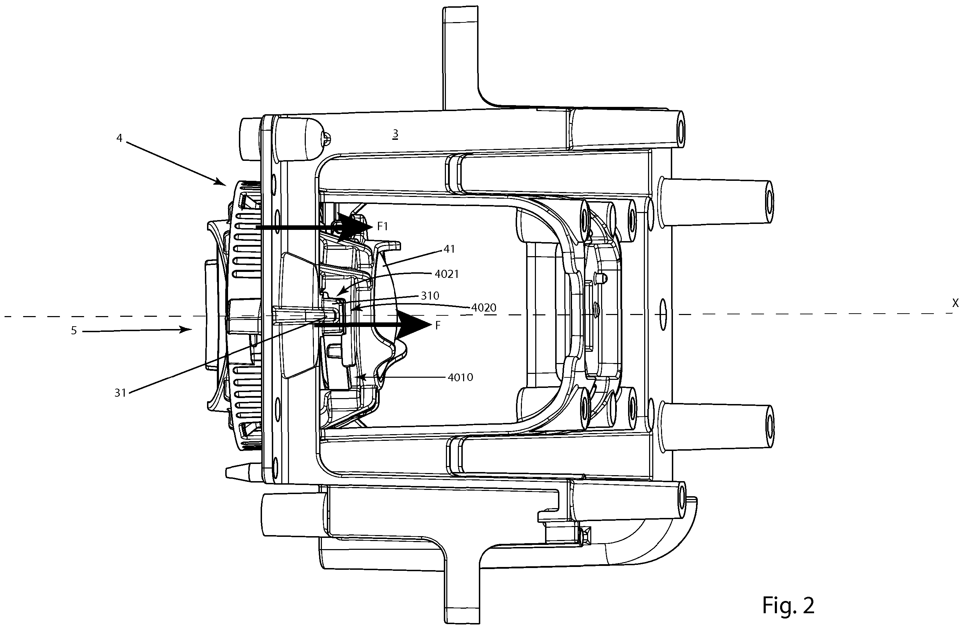

In der Arretierposition drückt jedes zumindest eine Federelement 402 gegen den korrespondierenden Bajonettvorsprung 31 mit einer Federkraft **F** (siehe Figur 2). Dadurch drücken die ersten, an den Bajonettvorsprüngen 31 angeordneten Referenzvorsprünge 32 gegen die Linse 41 bringen sie aufgrund der Federkraft F in eine Arretierposition, in der sie zu dem flachen Leuchtelement 2 referenziert ist. Das zumindest eine Federelement 402 übt also die Federkraft F auf den korrespondierenden Bajonettvorsprung 31 aus. Es findet eine statische Kraftübertragung statt, wobei die Bajonettvorsprünge 31 über die ersten Referenzvorsprünge 32 mit Federkraft F die Linse 41 gegen den Linsenträger 40 drücken und diese dadurch in der Arretierposition halten. Dadurch ergibt sich in der Arretierposition ein formschlüssiger Eingriff, durch den der Linsenträger 40 und folglich das ganze optische Abbildungssystem 4 in dem Tragrahmen 3 axialfest gehalten wird. Die Bajonettvorsprünge 31 und die damit zusammenwirkende Bajonettkonturen 401 verhindern somit das Zurückziehen des Objektivs 4 in die Axialrichtung X. Die ersten, an den Bajonettvorsprüngen 31 angeordneten Referenzvorsprünge 32 sorgen gleichzeitig dafür, dass die Linse 41 zu dem flachen Leuchtelement 2 referenziert ist.

Wie bereits erwähnt, kann der Tragrahmen 3 einstückig sein. Vorzugsweise ist der Tragrahmen 3 durch ein Spritzgussverfahren erhältlich, wobei insbesondere die ersten und die zweiten Referenzvorsprünge 32, 33 durch gleiche Werkzeughälfte in einem Spritzgussverfahren gebildet sind.

In den Figuren 1a und 1b ist zu erkennen, dass an jedem Bajonettvorsprung 31 genau ein erster Referenzvorsprung 32 angeordnet sein kann. Vorzugsweise springen alle Referenzvorsprünge 32, 33 in jene Richtung vor, die parallel zu einer optischen Achse X des Lichtmoduls 1 ausgerichtet ist. Die Axialrichtung X und die optische Achse des Lichtmoduls 1 fallen zweckmäßigerweise zusammen.

Die Bajonettvorsprünge 31 bilden einen Steckaufnahme-Bereich des Tragrahmens 3, in den der Linsenträger 40 entlang der Axialrichtung X zunächst eingeführt und anschließend beispielsweise im Gegenuhrzeigesinn gedreht wird. Der Steckaufnahme-Bereich kann beispielsweise einen im Wesentlichen runden Innenquerschnitt aufweisen.

Der Tragrahmen 3 der Figuren 1a und 1b zeigt genau drei Bajonettvorsprünge 31, genau drei ersten Referenzvorsprünge 32 und genau drei zweiten Referenzvorsprünge 33. Dem Fachmann soll allerdings klar sein, dass eine andere Anzahl der Bajonettvorsprünge sowie Zuordnung der Bajonettvorsprünge den Bajonettkonturen möglich ist.

Bezugnehmend auf die Figur 2, die das in dem Tragrahmen 3 arretierte Objektiv 4 zeigt, ist zu erkennen, dass die Federkraft F, mit der die Federelemente 402 gegen die korrespondierenden Bajonettvorsprünge 31 drücken vorteilhafterweise in die gleiche Richtung wirkt, in die alle Referenzvorsprünge 32, 33 (hier - parallel zur optischen Achse X) vorspringen. Es kann auch zweckdienlich sein, wenn alle ersten 32 und/oder alle zweiten Referenzvorsprünge 33 gleich hoch sind, wie dies in den Figuren dargestellt ist.

Zurückkommend auf die Figuren 1a und 1b ist es ersichtlich, dass die Bajonettvorsprünge 31 als sich von Peripherie zu Mitte des Tragrahmens 3 radial erstreckende Laschen ausgebildet sein können. Dabei ist zu erkennen, dass die ersten Referenzvorsprünge 32 an distalen Enden der Laschen angeordnet sind.

Das zumindest eine Federelement 402 kann aus einem elastischen Material, vorzugsweise demselben Material, aus dem der Linsenträger hergestellt ist, ausgebildet sein.

Vorzugsweise ist das zumindest eine Federelement 402 in dem Linsenträger 40, vorzugsweise in einer Umfangswand des Linsenträgers 40 ausgebildet. Hinsichtlich der Fertigung des Linsenträgers 40 ist es besonders vorteilhaft, das zumindest eine Federelement 402 einstückig mit dem Linsenträger 40 auszubilden.

Es ist zu erkennen, dass jede Bajonettkontur 401 einen Löseposition-Bereich **4010** und einen Arretierposition-Bereich **4020** aufweist, wobei der Löseposition-Bereich 4010 zum Aufnehmen des korrespondierenden Bajonettvorsprungs 31 bereitgestellt ist und das zumindest eine Federelement 402 in dem Arretierposition-Bereich 4020, vorzugsweise an einem Rand des Arretierposition-Bereichs 4020 angeordnet ist.

Beim Einführen des Linsenträgers 40 in den Tragrahmen 3 entlang der Axialrichtung X werden die Bajonettvorsprünge 31 in die korrespondierenden Löseposition-Bereiche 4010 eingeführt, bis sie an einem entsprechenden, die Bajonettkonturen 401 begrenzenden Bereich des Linsenträgers 40 anschlagen. Danach wird der Linsenträger 40 derart axial gedreht, dass die Bajonettvorsprünge 31 in Richtung der korrespondierenden Arretierposition-Bereiche 4020 wandern, bis sie einen Anschlag **4021** des korrespondierenden Arretierposition-Bereichs 4020 erreichen. Um mit dem Anschlag 4021 zusammenzuwirken, können an den Laschen 31 axial abstehende Stopper-Stücke **310** vorgesehen sein (siehe Figuren 1a, 1b und Figur 2). Die Anschläge 4021 und die dazu korrespondierende Teile der Bajonettvorsprünge 31, beispielsweise die an den Bajonettvorsprüngen 31 angeordneten Stopper-Stücke 310, wirken zusammen, um das Weiterdrehen des Linsenträgers 40 und folglich des Objektivs 4 zu verhindern.

Sobald die Bajonettvorsprünge 31 in die korrespondierenden Arretierposition-Bereiche 4020 hineingedreht werden, fangen die entsprechenden Federelemente 402 an, gegen die Bajonettvorsprünge 31, vorzugsweise auf eine dem flachen Leuchtelement 2 abgewandte Seite des entsprechenden Bajonettvorsprungs 31 zu drücken. Die ersten Referenzvorsprünge 32 sind beispielsweise an jenen Seiten der Bajonettvorsprünge 31 angeordnet, die dem flachen Leuchtelement 2 zugewandt sind. Somit werden die Bajonettvorsprünge 31 zwischen der Linse 41 und den Federelementen 402 gehalten, wenn der Linsenträger 40 mit dem Tragrahmen 3 über den bajonettartigen Verschluss verbunden ist. Dadurch wird die Linse 41 in der Arretierposition untergriffen, dabei untergreifen die Bajonettkonturen 401 die ersten Referenzvorsprünge 23, wonach das optische Abbildungssystem 4 in dem Tragrahmen 3 verastet. Wie bereits erwähnt, hat das Untergreifen den Vorteil, dass die Linse 41 direkt mittels des Linsenträgers 40 gegen den Tragrahmen 3 gedrückt wird, wodurch die Toleranzkette zwischen dem flachen Leuchtelement 2 und der Linse 41 wesentlich verkürzt wird. Somit wird ein Abstand von dem flachen Leuchtelement 2 zu der Linse 41 nur über ein einziges Bauteil - in dem vorliegenden Fall über Tragrahmen 3 - abgebildet. Dies vereinfacht das Abstimmen der Linse 41 (und folglich des optischen Abbildungssystems 4) auf das flache Leuchtelement und verkürzt die Toleranzkette. Eine kürzere Toleranzkette als bei dem erfindungsgemäßen Lichtmodul 1 wäre schwer zu denken.

Der oben beschriebene bajonettartige Verschluss ermöglicht also eine Montage des optischen Abbildungssystems 4 beziehungsweise des Objektivpakets von einer Unterseite. Dabei können die ersten und der zweiten Referenzvorsprünge 32, 33 auf der gleichen Seite des Tragrahmens 3 angeordnet sein beziehungsweise in dieselbe Richtung (zum flachen Leuchtelement 2) vorspringen. Infolgedessen können die ersten und die zweiten Referenzvorsprünge 32, 33 in der gleichen Werkzeughälfte abgebildet werden.

An dem Linsenträger 40 kann ein Referenzbereich **42** vorgesehen sein, gegen den die Linse 41 in der Arretierposition des Objektivs 4 gedrückt wird. Der Referenzbereich 42 ist vorzugsweise an einer Innenwand (an einer inneren Seite einer Umfangswand des Linsenträgers 40) des Linsenträgers 40 angeordnet. Der Referenzbereich 42 kann beispielsweise als eine umlaufende Druckfläche oder als drei definierte, vorzugsweise in gleichmäßigen Winkelabständen angeordnete Druckpunkte **420** ausgebildet sein.

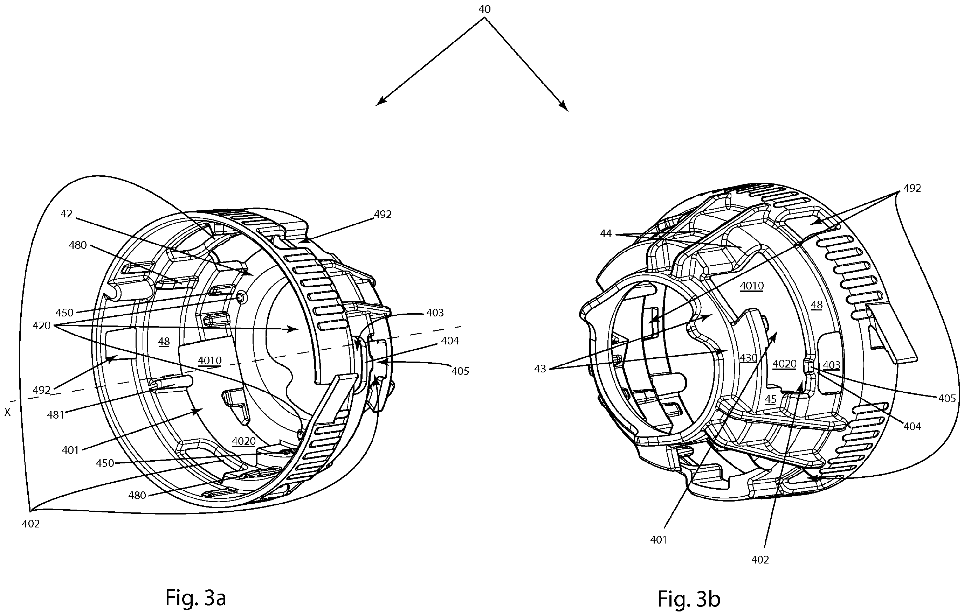

Weiters wird auf Figuren 3a und 3b Bezug genommen, die zwei vergrößerte perspektivische Ansichten des Linsenträgers 40 der Figuren 1a, 1b und 2 zeigen. In den Figuren ist deutlich zu erkennen, dass der Linsenträger 40 als ein einstückiger, zylinderförmiger Hohlkörper ausgeführt sein kann, dessen Wand sich zu dem flachen Leuchtelement 2 hin treppenartig verjüngt. Beispielsweise kann der Linsenträger 40 zumindest teilweise und insbesondere die Federelemente 402 aus Kunststoff ausgebildet sein.

Der Hohlkörper 40 weist im Wesentlichen einen runden Querschnitt und mehrere Stufen **43, 44** sowie die Stufen 43, 44 verbindende Setzstufen **45, 48** auf. Jeder Stufe kann eine Setzstufe zugeordnet sein. Dadurch kann der Hohlkörper 40 in Linsenaufnahmebereiche unterteilt werden. So umfassen beispielsweise eine erste Stufe 43 und eine erste Setzstufe 45 einen ersten Linsenaufnahmebereich mit einem im Wesentlichen runden Querschnitt. In dem ersten Linsenaufnahmebereich wird beispielsweise die Linse 41 aufgenommen. Eine zweite Stufe 44 und eine zweite an sie anschließende Setzstufe 48 umfassen einen zweiten Linsenaufnahmebereich, in dem weitere Linsen - hier als Zusatz-Linsen **46, 47** genannt - aufgenommen werden können. Der zweite Linsenaufnahmebereich weist vorzugsweise ebenfalls einen im Wesentlichen runden Querschnitt und einen größeren Durchmesser als der erste Linsenaufnahmebereich. Die Stufen 43, 44 begrenzen eine axiale Bewegung der Linse 41 beziehungsweise zumindest einer der Zusatz-Linsen 46, 47 zu dem DMD-Chip 2 hin.

Besonders in den Figuren 3a und 3b ist zu erkennen, dass sich jede Bajonettkontur 401 über zumindest zwei Stufen - die erste Stufe 43 und eine zweite Stufe 44 - und die erste, zwischen den zumindest zwei Stufen angeordnete Setzstufe 45 des Hohlkörpers erstreckt. Somit sind die Bajonettkonturen 401 in einem Wandbereich des Hohlkörpers 40 ausgebildet, welcher Wandbereich den ersten Linsenaufnahmebereich umfasst und durch die erste Stufe 43, die zweite Stufe 44 und die dazwischen liegende erste Setzstufe 45 gebildet ist.

Der oben beschriebene Referenzbereich 42 kann beispielsweise an einer Innenseite der ersten Stufe 43 angeordnet sein. Vorzugsweise weist die erste Stufe 43 einen massiven Stufen-Bereich **430** auf, an dessen Innenseite der Referenzbereich 42 angeordnet ist.

Dementsprechend kann die Linse 41 einen vom Rand der Linse 41 radial abstehenden Radialkragen **410** mit einem massiven Radialkragen-Bereich **411** aufweisen, wobei der massive Radialkragen-Bereich 411 dem massiven Stufen-Bereich 430 zugeordnet ist und auf diesem aufliegt. In Arretierposition drücken die ersten, an den Bajonettvorsprüngen 31 angeordneten Referenzvorsprünge 32 den massiven Radialkragen-Bereich 411 der Linse 41 gegen den Referenzbereich 42, beispielsweise gegen den massiven Stufen-Bereich 430 der ersten Stufe 43. Es sei an dieser Stelle angemerkt, dass die erste Stufe 43, die zweite Stufe 44, die erste Setzstufe und der Radialkragen 410 der Linse 41 jeweils einen leeren Bereich aufweisen. Durch diese leeren Bereiche passieren die Bajonettvorsprünge 31, während das optische Abbildungssystem 4 in den Tragrahmen 3 gesteckt wird. Die leeren Bereiche der ersten und der zweiten Stufe 43, 44 und der leere Bereich der ersten Setzstufe 45 bilden gemeinsam die Löseposition-Bereiche 4010 der Bajonettkonturen 401.

Wie bereits erwähnt, kann das optische Abbildungssystem, die als ein Objektiv 4 ausgebildet sein kann, zumindest eine weitere Linse - die erste Zusatz-Linse 46 und die zweite Zusatz-Linse 47 in den Figuren 1a, 1b und 3 - umfassen. Beide Linsen 46, 47 sind in dem zweiten Linsenaufnahmebereich aufgenommen und von der zweiten Setzstufe 48 des Linsenträgers 40 radial umfasst.

Wie bereits in der Beschreibungseinleitung erwähnt können in dem Linsenträger 40 beispielsweise als Zentrierstege ausgebildete Zentrier-Elemente **450, 480** vorgesehen sein. Die Zentrier-Elemente 450, 480 beziehungsweise Zentrierstege sind eingerichtet, optische Achsen der Optiken - der Linse 41 und der zumindest einen Zusatz-Linse 46, 47 - zu positionieren und aufeinander abzustimmen. Vorzugsweise liegen die Optiken 41, 46, 47 in dem Linsenträger 40 an den entsprechenden Zentrier-Elementen spielfrei an.

Weiters ist insbesondere in den Figuren 3a und 3b zu erkennen, dass die erste Setzstufe 45 auf ihrer Innenmantelfläche zumindest ein erstes Zentrier-Element 450 und die zweite Setzstufe 48 auf ihrer Innenmantelfläche zumindest ein zweites Zentrier-Element 480 aufweisen kann. Die Zentrier-Elemente 450 und 480 sind in entsprechenden Linsenaufnahmebereichen angeordnet und zum Zentrieren der Linsen 41, 46, 47 in dem Objektiv 4 vorgesehen. Dabei werden das erste Zentrier-Element 450 und das zweite Zentrier-Element 480 aufeinander derart abgestimmt, dass die Linsen - also die Linse 41 und die Zusatz-Linsen 46, 47 - in dem Linsenträger 40 zentriert sind.

Weiters kann die zweite Setzstufe 48 auf ihrer Innenmantelfläche ein Antirotationselement **481** zum Verhindern einer Rotation der Zusatz-Linsen 46, 47 in dem Linsenträger 40 vorgesehen sein. Die zumindest eine Zusatz-Linse 46, 47 kann über ein dem Antirotationselement 481 korrespondierendes Gegenelement **460, 470** verfügen, das mit dem Antirotationselement 481 in Eingriff gebracht werden kann und die Rotation der zumindest einen Zusatz-Linse 46, 47 verhindern kann.

Das beispielsweise als ein Steg ausgebildete Antirotationselement 481 - manchmal als "Codierungssteg" genannt - kann sicher stellen, dass Zusatz-Linsen, die keine rotationssymmetrische optische Fläche in Bezug auf die Linsenbundachse aufweisen - beispielsweise die zweite Zusatz-Linse 47, nicht verdreht verbaut werden können und dadurch die Lichtverteilung nicht verzerrt werden kann.

Sowohl das erste Zentrier-Element 450 als auch das zweite Zentrier-Element 480 kann in Form sich in Axialrichtung X beziehungsweise entlang der optischen Achse des Lichtmoduls 1 erstreckender Erhebungen ausgebildet sein. Beispielsweise sind die Zentrier-Elemente 450, 480 einer Innenmantelfläche der entsprechenden Setzstufe 45, 48 vorzugsweise in gleichmäßigen Winkelabständen angeordnet.

Ebenfalls können das Antirotationselement 481 als eine sich in Axialrichtung X ersteckende Erhebung und die Gegenelemente 460, 470 als zu dem Antirotationselement 481 korrespondierende Ausnehmungen ausgebildet sein.

Beispielsweise können auch die Zusatz-Linsen 46, 47 einen von ihrem optisch relevanten Körper radial abstehende Kragen 461, 471 aufweisen, in den jeweilige Ausnehmung(en) 460, 470 ausgebildet ist (sind).

Weiters ist insbesondere in den Figuren 3a, 3b zu erkennen, dass jeder Bajonettkontur 401 jeweils eine Öffnung **403** in der Umfangswand zugeordnet sein kann. Die Öffnungen 403 sind beispielsweise in der zweiten Setzstufe 48 ausgebildet. Die Bajonettkonturen 401 sind beispielsweise von den jeweiligen Öffnungen 403 durch jeweils einen Steg **404** getrennt. Die Stege 404 weisen je einen Nocken **405,** der in die entsprechende Bajonettkontur 401, vorzugsweise in Axialrichtung X vorspringt. Jedes Federelement 402 kann durch jeweils den Steg 404 mit dem an dem Steg 404 ausgebildeten Nocken 405 gebildet sein. Zweckmäßigerweise sind die Stege 404 aus einem elastischen Material, vorzugsweise aus demselben Material, aus dem der Linsenträger 40 hergestellt ist, ausgebildet, um bei einem durch Bajonettvorsprünge 31 auf die Nocken 405 ausgeübten Druck nachgeben zu können. Die Stege 404 können dabei dementsprechend dünn ausgeführt sein, damit sie bei dem auf die entsprechenden Nocken 405 ausgeübten Druck federn und die Federkraft F erzeugen können. Zu dünne Stege 404 wären allerdings unerwünscht, weil sie brechen könnten. Die Dicke der Stege 404 kann je nach Material, aus dem die Stege 404 hergestellt sind, und/oder zu erzeugende Federkraft variieren.

Durch die Richtung, in die der Nocken 405 vorspringt kann die Richtung festlegt werden, in die die Federkraft F wirkt.

Das optische Abbildungssystem 4 kann darüber hinaus ein Halteelement 49 aufweisen, welches Halteelement 49 mit dem Linsenträger 40 über eine Rastverbindung verbunden werden kann und eingerichtet ist, die zumindest eine Zusatz-Linse 46, 47 in dem Linsenträger 40 zu halten. Die Rastverbindung verhindert das Herausfallen der Zusatz-Linsen 46, 47 aus dem Linsenträger 40 in axiale Richtung X. Das Halteelement 49 kann federnde Zungen **490** aufweisen, die zum Halten der zumindest einen Zusatz-Linse 46, 47 in dem Linsenträger 40 eingerichtet sind. Die Rastverbindung kann beispielsweise durch an dem Halteelement 49 angeordnete Rastvorsprünge **491** und zu den Rastvorsprüngen 491 korrespondierende in dem Linsenträger 40 ausgebildete Rasten **492** gebildet sein.

In einer Rastposition des Halteelements 49 in dem Linsenträger 40 wirken die federnden Zungen 490 auf die zumindest eine Zusatz-Linse 46, 47, beispielsweise auf die zweite Zusatz-Linse 47, mit einer anderen Federkraft F1. Durch Vorspannen der federnden Zungen 490 wird die zumindest eine Zusatz-Linse, vorzugsweise beide Zusatz-Linsen 46, 47 in dem zweiten Linsenaufnahmebereich des Linsenträgers 40 gehalten.

Das Halteelement 49 drückt mithilfe der federnden Zungen 490 beide Zusatz-Linsen 46, 47 auf die Linse 41 und fixiert diese somit in eine definierte Position, in der die Zusatz-Linsen 46, 47 zu der Linse 41 referenziert ist. Da die Linse zu dem Tragrahmen und/oder zu dem flachen Leuchtelement referenziert ist, ist auch die zumindest eine Zusatz-Linse zu dem Tragrahmen und/oder zu dem flachen Leuchtelement referenziert. Über die Zentrier-Elemente 450, 480, beispielsweise Zentrierstege, wird die zumindest eine Zusatz-Linse - in dem gezeigten Beispiel beide Zusatz-Linsen 46, 47 - zu der Linse 41 referenziert und/oder zentriert.

Wie oben beschrieben, ist die Linse 41 auf den Tragrahmen 3 und folglich auf das flache Leuchtelement 2 beispielsweise den DMD-Chip referenziert. Somit sind die Zusatz-Linsen 46, 47 ebenfalls auf den Tragrahmen 3 und folglich auf das flache Leuchtelement 2 referenziert und/oder zu diesem zentriert.

Weiters kann das Lichtmodul 1 ein Sicherungsmittel 5 aufweisen, welches dem optischen Abbildungssystem 4 und dem Tragrahmen 3 zugeordnet ist und eingerichtet ist, ein spontanes Lösen des optischen Abbildungssystems 4 von dem Tragrahmen 3 beispielsweise während des Einsatzes des Lichtmoduls 1 in einem fahrenden Personenkraftwagen zu verhindern. Das Sicherungsmittel 5 weist dabei ein erstes an dem optischen Abbildungssystem 4, vorzugsweise an dem Linsenträger 40 angeordnetes Sicherungselement 50 und ein zweites, dem Sicherungselement 50 korrespondierendes, an dem Tragrahmen 3 angeordnetes Sicherungselement 51. Beispielsweise wirkt das erste Sicherungselement 50 mit dem zweiten Sicherungselement 51, wenn das optische Abbildungssystem 4 mit dem Tragrahmen 3 über den bajonettartigen Verschluss verbunden ist, derart zusammen, dass ein Zurückdrehen des optischen Abbildungssystems 4 aus dem verbundenen Zustand verhindert wird.

In der Figur 1a ist zu erkennen, dass das erste Sicherungselement 50 als eine von dem Linsenträger 40 radial abstehende und sich in Umfangsrichtung erstreckende beziehungsweise von dem Linsenträger 40 tangential abstehende Federlasche ausgebildet sein kann, wobei das zweite Sicherungselement 51 als ein in Axialrichtung X vorspringendes Stopper-Element ausgebildet sein kann. Beim Hineindrehen des Objektivs 4 in die Arretierposition wird die Federlasche 50 von dem Stopper-Element 51 radial vorgespannt. Die Federlasche 50 ist derart ausgebildet, beispielsweise weist derartige Länge auf, dass sie mit dem Stopper-Element 51 nicht mehr in Eingriff steht, sobald die Arretierposition erreicht wird. Dabei passiert eine distale Spitze 501 der Federlasche 50 das Stopper-Element 51, weshalb die Federlasche 50 in eine nicht vorgespannte Position zurückkehrt. Bei einem Zurückdrehen des Linsenträgers 40 aus der Arretierposition drückt die Federlasche 50 mit ihrer distalen Spitze 501 gegen das Stopper-Element 51 und verhindert somit ein weiteres Herausdrehen des Objektivs 4 aus dem Tragrahmen 3. Um das Objektiv 4 aus dem Tragrahmen 3 herauszudrehen, kann die Federlasche 50 z.B. mit einem Finger eines Benutzers zur Mitte des Linsenträgers 40 gedrückt werden, wobei der Linsenträger 40 gleichzeitig gedreht wird, um den Linsenträger 40 aus der Arretierposition herauszudrehen. Bei dem vorstehend beschriebenen Lichtmodul 1 erfolgt das Referenzieren durch den Linsenträger 40. Dadurch ist das Referenzieren der Optiken 41, 46, 47 in dem Linsenträger 40 auf der gleichen Seite wie das flache Leuchtelement 2, beispielsweise der DMD-Chip möglich. Darüber hinaus ist eine Vormontage der Optiken 41, 46, 47 zu einem Paket beziehungsweise einem Objektiv 4 möglich, welches anschließend leicht und ohne zusätzlichen Hilfsmitteln von einem Bediener (in einen Tragrahmen 3) montierbar ist.

Es versteht sich, dass das Lichtmodul auch andere Teile, wie beispielsweise Kühlkörper, Steuereinrichtung, mechanische und/oder elektrische Stellvorrichtungen, Abdeckungen und so weiter und sofort aufweisen kann. Der Einfachheit der Darstellung halber wird hier auf die Beschreibung dieser standardmäßigen Bauteile verzichtet.

Die Bezugsziffern in den Ansprüchen und in der Beschreibung dienen lediglich zu einem besseren Verständnis der vorliegenden Anmeldung und sollen auf gar keinen Fall als eine Beschränkung des Gegenstands der vorliegenden Erfindung angesehen werden.

In den folgenden Figuren bezeichnen - sofern nicht anders angegeben - gleiche Bezugszeichen gleiche Merkmale.

## Patentansprüche

1. Lichtmodul (1) für einen Kraftfahrzeugscheinwerfer mit einem flachen Leuchtelement (2), einem Tragrahmen (3) und einem in dem Tragrahmen (3) befestigten optischen Abbildungssystem (4), wobei das optische Abbildungssystem (4) einen Linsenträger (40) und eine in dem Linsenträger (40) angeordnete Linse (41) umfasst und das flache Leuchtelement (2) in einem Aufnahme-Bereich (30) des Tragrahmens (30) angeordnet ist, wobei
- das optische Abbildungssystem (4) über einen bajonettartigen Verschluss mit dem Tragrahmen (3) verbunden ist, wobei
* der Tragrahmen (3) Bajonettvorsprünge (31) aufweist, die mit Bajonettkonturen (401) des Linsenträgers (40) korrespondieren und zu den Bajonettkonturen (401) passend ausgebildet sind, und
* jede Bajonettkontur (401) zumindest ein Federelement (402) aufweist,
- der Tragrahmen (3) erste und zweite Referenzvorsprünge (32, 33) zum Referenzieren der Linse (41) zu dem flachen Leuchtelement (2) aufweist, wobei die ersten Referenzvorsprünge (32) an den Bajonettvorsprüngen (31) und die zweiten Referenzvorsprünge (33) in dem Aufnahme-Bereich (30) angeordnet sind,
wobei
* alle Referenzvorsprünge (32, 33) zu dem flachen Leuchtelement (2) hin vorspringen, und
* jedes zumindest eine Federelement (402) gegen den korrespondierenden Bajonettvorsprung (31) drückt, wodurch die ersten Referenzvorsprünge (32) die Linse (41) in eine Arretierposition drücken, in der sie zu dem flachen Leuchtelement (2) referenziert ist.

2. Lichtmodul nach Anspruch 1, **dadurch gekennzeichnet, dass** der Tragrahmen (3) einstückig, vorzugsweise durch ein Spritzgussverfahren erhältlich ist, wobei insbesondere die ersten und die zweiten Referenzvorsprünge (32, 33) durch gleiche Werkzeughälfte in einem Spritzgussverfahren gebildet sind.

3. Lichtmodul nach Anspruch 1 oder 2, **dadurch gekennzeichnet, dass** alle Referenzvorsprünge (32, 33) in eine Richtung vorspringen, die parallel zu einer optischen Achse (X) des Lichtmoduls (1) ausgerichtet ist.

4. Lichtmodul nach einem der Ansprüche 1 bis 3, **gekennzeichnet durch, dass** genau drei Bajonettvorsprünge (31), genau drei ersten Referenzvorsprünge (32) und vorzugsweise genau drei zweiten Referenzvorsprünge (33) vorgesehen sind.

5. Lichtmodul nach einem der Ansprüche 1 bis 4, **dadurch gekennzeichnet, dass** die Bajonettvorsprünge (31) als sich von Peripherie zu Mitte des Tragrahmens (3) radial erstreckende Laschen ausgebildet sind.

6. Lichtmodul nach einem der Ansprüche 1 bis 5, **dadurch gekennzeichnet, dass** jede Bajonettkontur (401) einen Löseposition-Bereich (4010) und einen Arretierposition-Bereich (4020) aufweist, wobei der Löseposition-Bereich (4010) zum Aufnehmen des korrespondierenden Bajonettvorsprungs (31) bereitgestellt ist und das zumindest eine Federelement (402) in dem Arretierposition-Bereich (4020) angeordnet ist.

7. Lichtmodul nach einem der Ansprüche 1 bis 6, **dadurch gekennzeichnet, dass** der Linsenträger (40) ein einstückiger, zylinderförmiger, vorzugsweise zumindest teilweise aus Kunststoff ausgebildeter Hohlkörper ist, dessen Wand sich zu dem flachen Leuchtelement (2) hin treppenartig verjüngt.

8. Lichtmodul nach einem der Ansprüche 1 bis 7, **dadurch gekennzeichnet, dass** in der Arretierposition die Linse (41) von den ersten Referenzvorsprüngen (32) gegen einen Referenzbereich (42) des Linsenträgers (40) gedrückt ist, wobei der Referenzbereich (42) vorzugsweise an einer Innenwand des Linsenträgers (40) angeordnet ist und beispielsweise als eine umlaufende Druckfläche, insbesondere als drei definierte Druckpunkte (420) ausgebildet ist.

9. Lichtmodul nach einem der Ansprüche 1 bis 8, **dadurch gekennzeichnet, dass** das optische Abbildungssystem zumindest eine weitere Linse - eine Zusatz-Linse (46, 47) - aufweist, und der Linsenträger (40) auf seiner Innenwand zumindest ein erstes der Linse (41) zugeordnetes Zentrier-Element (450) und ein zweites der zumindest einen Zusatz-Linse (46, 47) zugeordnetes Zentrier-Element (480) aufweist, wobei das zumindest eine erste Zentrier-Element (450) und das zumindest eine zweite Zentrier-Element (480) einander derart korrespondieren, dass die Linse (41) und die Zusatz-Linsen (46, 47) in dem Linsenträger (40) zentriert sind, wobei vorzugsweise der Linsenträger (40) auf seiner Innenwand ein Antirotationselement (481) zum Verhindern einer Rotation der zumindest einen Zusatz-Linse (46, 47) aufweist, wobei die zumindest eine Zusatz-Linse (46, 47) beispielsweise ein dem Antirotationselement (481) korrespondierendes Gegenelement (460, 470) aufweist, das mit dem Antirotationselement (481) in Eingriff steht und die Rotation der zumindest einen Zusatz-Linse (46, 47) verhindert.

10. Lichtmodul nach einem der Ansprüche 1 bis 9, **dadurch gekennzeichnet, dass** das optische Abbildungssystem (4) ein Halteelement (49) aufweist, welches Halteelement (49) mit dem Linsenträger (40) über eine Rastverbindung verbunden ist und die zumindest eine Zusatz-Linse (46, 47) in dem Linsenträger (40) hält, wobei das Halteelement (49) vorzugsweise federnde Zungen (490) zum Halten der zumindest einen Zusatz-Linse (46, 47) in dem Linsenträger (40) aufweist.

11. Lichtmodul nach einem der Ansprüche 1 bis 10, **dadurch gekennzeichnet, dass** jeder Bajonettkontur (401) jeweils eine Öffnung (403) zugeordnet ist, wobei die Bajonettkontur (401) von der jeweiligen Öffnung (403) durch einen Steg (404) getrennt ist, welcher einen in die Bajonettkontur (401) vorspringenden Nocken (405) aufweist, wobei der Steg mit dem Nocken das entsprechende Federelement (402) bilden.

12. Lichtmodul nach einem der Ansprüche 1 bis 11, **durch gekennzeichnet durch** ein Sicherungsmittel (5), das dem optischen Abbildungssystem (4) und dem Tragrahmen (3) zugeordnet ist und eingerichtet ist, ein spontanes Lösen des optischen Abbildungssystems (4) von dem Tragrahmen (3) zu verhindern.

13. Lichtmodul nach einem der Ansprüche 1 bis 12, **dadurch gekennzeichnet, dass** das zumindest eine Federelement (402) einstückig mit dem Linsenträger (40), vorzugsweise in dessen Umfangswand, ausgebildet ist.

14. Lichtmodul nach einem der Ansprüche 1 bis 13, **dadurch gekennzeichnet, dass** das zumindest eine Federelement (402) aus einem elastischen Material, vorzugsweise demselben Material, aus dem der Linsenträger (40) hergestellt ist, ausgebildet ist.

15. Kraftfahrzeugscheinwerfer mit zumindest einem Lichtmodul nach einem der Ansprüche 1 bis 14.

## Claims

1. A light module (1) for a motor vehicle headlight having a planar luminous element (2), a support frame (3) and an optical imaging system (4) which is fastened in the support frame (3), wherein the optical imaging system (4) comprises a lens carrier (40) and a lens (41) which is arranged in the lens carrier (40) and the planar luminous element (2) is arranged in a receiver region (30) of the support frame (30), wherein
- the optical imaging system (4) is connected via a bayonet-like closure to the support frame (3), wherein
* the support frame (3) comprises bayonet projections (31) which correspond to bayonet contours (401) of the lens carrier (40) and which are configured to be adapted to the bayonet contours (401) and
* each bayonet contour (401) comprises at least one spring element (402)
- the support frame (3) comprises first and second reference projections (32, 33) for referencing the lens (41) relative to the planar luminous element (2), wherein the first reference projections (32) are arranged on the bayonet projections (31) and the second reference projections (33) are arranged in the receiver region (30), wherein
* all of the reference projections (32, 33) project toward the planar luminous element (2), and
* each at least one spring element (402) presses against the corresponding bayonet projection (31), whereby the first reference projections (32) press the lens (41) into a blocked position in which it is referenced relative to the planar luminous element (2) .

2. The light module according to Claim 1, **characterised in that** the support frame (3) is able to be obtained in one piece, preferably by an injection-moulding method, wherein the first and the second reference projections (32, 33) are formed, in particular, by the same mould half in an injection-moulding method.

3. The light module according to Claim 1 or 2, **characterised in that** all of the reference projections (32, 33) project in one direction which is oriented parallel to an optical axis (X) of the light module (1).

4. The light module according to one of Claims 1 to 3, **characterised in that** specifically three bayonet projections (31), specifically three first reference projections (32) and preferably specifically three second reference projections (33) are provided.

5. The light module according to one of Claims 1 to 4, **characterised in that** the bayonet projections (31) are configured as tabs extending radially from the periphery to the centre of the support frame (3).

6. The light module according to one of Claims 1 to 5, **characterised in that** each bayonet contour (401) has a release position region (4010) and a blocked position region (4020), wherein the release position region (4010) is provided for receiving the corresponding bayonet projection (31) and the at least one spring element (402) is arranged in the blocked position region (4020).

7. The light module according to one of Claims 1 to 6, **characterised in that** the lens carrier (40) is a hollow body which is configured in one piece, in a cylindrical manner and preferably at least partially from plastics, the wall thereof tapering in a step-like manner toward the planar luminous element (2).

8. The light module according to one of Claims 1 to 7, **characterised in that** in the blocked position the lens (41) is pressed by the first reference projections (32) against a reference region (42) of the lens carrier (40), wherein the reference region (42) is preferably arranged on an inner wall of the lens carrier (40) and is configured, for example, as a peripheral pressure surface, in particular as three defined pressure points (420).

9. The light module according to one of Claims 1 to 8, **characterised in that** the optical imaging system comprises at least one further lens - an additional lens (46, 47) - and the lens carrier (40) on its inner wall comprises at least one first centring element (450) which is assigned to the lens (41) and a second centring element (480) which is assigned to the at least one additional lens (46, 47), wherein the at least one first centring element (450) and the at least one second centring element (480) correspond to one another such that the lens (41) and the additional lenses (46, 47) are centred in the lens carrier (40), wherein preferably the lens carrier (40) on its inner wall comprises an anti-rotation element (481) for preventing a rotation of the at least one additional lens (46, 47), wherein the at least one additional lens (46, 47) comprises, for example, a counter-element (460, 470), said counter-element corresponding to the anti-rotation element (481), being in engagement with the anti-rotation element (481) and preventing the rotation of the at least one additional lens (46, 47).

10. The light module according to one of Claims 1 to 9, **characterised in that** the optical imaging system (4) comprises a retaining element (49), which retaining element (49) is connected to the lens carrier (40) via a latching connection and retains the at least one additional lens (46, 47) in the lens carrier (40), wherein the retaining element (49) preferably comprises resilient tongues (490) for retaining the at least one additional lens (46, 47) in the lens carrier (40).

11. The light module according to one of Claims 1 to 10, **characterised in that** each bayonet contour (401) is respectively assigned an opening (403), wherein the bayonet contour (401) is separated from the respective opening (403) by a protuberance (404) which comprises a cam (405) projecting into the bayonet contour (401), wherein the protuberance forms with the cam the corresponding spring element (402).

12. The light module according to one of Claims 1 to 11, **characterised by** a securing means (5) which is assigned to the optical imaging system (4) and the support frame (3) and which is designed to prevent the inadvertent release of the optical imaging system (4) from the support frame (3).

13. The light module according to one of Claims 1 to 12, **characterised in that** the at least one spring element (402) is configured in one piece with the lens carrier (40), preferably in the peripheral wall thereof.

14. The light module according to one of Claims 1 to 13, **characterised in that** the at least one spring element (402) is configured from a resilient material, preferably the same material from which the lens carrier (40) is produced.

15. A motor vehicle headlamp having at least one light module according to one of Claims 1 to 14.

## Revendications

1. Module lumineux (1), destiné à un projecteur de véhicule, pourvu d'un élément lumineux (2) plat, d'un cadre porteur (3) et d'un système de reproduction (4) optique fixé dans le cadre porteur (3), le système de reproduction (4) optique comprenant un support de lentille (40) et une lentille (41) placée dans le support de lentille (40) et l'élément lumineux (2) plat étant placé dans une zone de logement (30) du cadre porteur (30),
- le système de reproduction (4) optique étant relié avec le cadre porteur (3) par l'intermédiaire d'une fermeture à baïonnette,
* le cadre porteur (3) comportant des saillies de baïonnette (31), qui correspondent à des contours de baïonnette (401) du support de lentille (40) et qui sont conçues en adaptation à des contours de baïonnette (401), et
* chaque contour de baïonnette (401) comportant au moins un élément à ressort (402),
- le cadre porteur (3) comportant des premières et deuxièmes saillies de référence (32, 33), pour le référencement de la lentille (41) par rapport à l'élément lumineux (2) plat, les premières saillies de référence (32) étant placées sur les saillies de baïonnette (31) et les deuxièmes saillies de référence (33) étant placées dans la zone de logement (30),
* toutes les saillies de référence (32, 33) saillant en direction de l'élément lumineux (2) plat, et
* chaque au moins un élément à ressort (402) pressant contre la saillie de baïonnette (31) correspondante, suite à quoi les premières saillies de référence (32) pressent la lentille (41) dans une position de blocage, dans laquelle elle est référencée par rapport à l'élément lumineux (2) plat.

2. Module lumineux selon la revendication 1, **caractérisé en ce que** le cadre porteur (3) est susceptible d'être obtenu en monobloc, de préférence par procédé de moulage par injection, notamment les premières et les deuxièmes saillies de référence (32, 33) étant formées par deux moitiés de moule identiques dans un procédé de moulage par injection.

3. Module lumineux selon la revendication 1 ou 2, **caractérisé en ce que** toutes les saillies de référence (32, 33) saillissent dans une direction, qui est orientée à la parallèle d'un axe optique (X) du module lumineux (1).

4. Module lumineux selon l'une quelconque des revendications 1 à 3, **caractérisé en ce que** précisément trois saillies de baïonnette (31), précisément trois premières saillies de référence (32) et de préférence, précisément trois deuxièmes saillies de référence (33) sont prévues.

5. Module lumineux selon l'une quelconque des revendications 1 à 4, **caractérisé en ce que** les saillies de baïonnette (31) sont conçues sous la forme de pattes s'étendant en direction radiale de la périphérie vers le centre du cadre porteur (3).

6. Module lumineux selon l'une quelconque des revendications 1 à 5, **caractérisé en ce que** chaque contour de baïonnette (401) comporte une zone de position de désolidarisation (4010) et une zone de position de blocage (4020), la zone de position de désolidarisation (4010) étant mise à disposition pour réceptionner la saillie de baïonnette (31) correspondante et l'au moins un élément à ressort (402) étant placé dans la zone de position de blocage (4020).

7. Module lumineux selon l'une quelconque des revendications 1 à 6, **caractérisé en ce que** le support de lentille (40) est un corps creux en monobloc, de forme cylindrique, de préférence conçu au moins en partie en matière plastique, dont la paroi se rétrécit en gradins en direction de l'élément lumineux (2) plat.

8. Module lumineux selon l'une quelconque des revendications 1 à 7, **caractérisé en ce que** dans la position de blocage, la lentille (41) est pressée par les saillies de référence (32) contre une zone de référence (42) du support de lentille (40), la zone de référence (42) étant placée de préférence sur une paroi interne du support de lentille (40) et étant conçue par exemple comme une surface de pression périphérique, notamment comme trois points de pression (420) définis.

9. Module lumineux selon l'une quelconque des revendications 1 à 8, **caractérisé en ce que** le système de reproduction optique comporte au moins une lentille supplémentaire - une lentille additionnelle (46, 47) - et le support de lentille (40) comporte sur sa paroi interne au moins un premier élément de centrage (450) associé à la lentille (41) et un deuxième élément de centrage (480) associé à l'au moins une lentille additionnelle (46, 47), l'au moins un premier élément de centrage (450) et l'au moins un deuxième élément de centrage (480) se correspondant mutuellement, de telle sorte que la lentille (41) et les lentilles additionnelles (46, 47) soient centrées dans le support de lentille (40), de préférence, le support de lentille (40) comportant sur sa paroi interne un élément anti-rotatoire (481), destiné à empêcher une rotation de l'au moins une lentille additionnelle (46, 47), l'au moins une lentille additionnelle (46, 47) comportant par exemple un élément antagoniste (460, 470) correspondant à l'élément anti-rotatoire (481), qui est en engagement avec l'élément anti-rotatoire (481) et qui empêche la rotation de l'au moins une lentille additionnelle (46, 47).

10. Module lumineux selon l'une quelconque des revendications 1 à 9, **caractérisé en ce que** le système de reproduction (4) optique comporte un élément de maintien (49), lequel élément de maintien (49) est relié avec le support de lentille (40) par l'intermédiaire d'une liaison par enclenchement et maintient l'au moins une lentille additionnelle (46, 47) dans le support de lentille (40), l'élément de maintien (49) comportant de préférence des languettes (490) élastiques, destinées à maintenir l'au moins une lentille additionnelle (46, 47) dans le support de lentille (40).

11. Module lumineux selon l'une quelconque des revendications 1 à 10, **caractérisé en ce qu'**à chaque contour de baïonnette (401) est associé au moins un orifice (403), le contour de baïonnette (401) étant séparé de l'orifice (403) respectif par une barrette (404), laquelle comporte une came (405) saillant dans le contour de baïonnette (401), la barrette formant avec la came l'élément à ressort (402) correspondant.

12. Module lumineux selon l'une quelconque des revendications 1 à 11, **caractérisé par** un moyen de blocage (5), qui est associé au système de reproduction (4) optique et au cadre porteur (3) et qui est aménagé pour empêcher une désolidarisation spontanée du système de reproduction (4) optique du cadre porteur (3).

13. Module lumineux selon l'une quelconque des revendications 1 à 12, **caractérisé en ce que** l'au moins un élément à ressort (402) est conçu en monobloc avec le support de lentille (40), de préférence dans sa paroi périphérique.

14. Module lumineux selon l'une quelconque des revendications 1 à 13, **caractérisé en ce que** l'au moins un élément à ressort (402) est conçu dans une matière élastique, de préférence dans la même matière dans laquelle est fabriqué le support de lentille (40).

15. Projecteur de véhicule, pourvu d'au moins un module lumineux selon l'une quelconque des revendications 1 à 14.
